# EUROPEAN PATENT SPECIFICATION

(11) **EP 0 950 220 B1**
(45) Date of publication and mention of the grant of the patent: **03.09.2003**
(21) Application number: 97944532.7
(22) Date of filing: 29.09.1997
(51) Int. Cl.: G06F 11/30, G06F 13/40

(54) **DYNAMICALLY UPGRADEABLE DISK ARRAY SYSTEM AND METHOD**
DYNAMISCH ERWEITERBARES SPEICHERPLATTENANORDNUNGSSYSTEM UND VERFAHREN
SYSTEME DE PILES DE DISQUES DYNAMIQUEMENT EVOLUTIF ET PROCEDE CORRESPONDANT

(30) Priority: 14.11.1996 US 748884; 13.02.1997 US 801603
(43) Date of publication of application: 20.10.1999
(73) Proprietor: EMC CORPORATION, Hopkinton, MA 01748 (US)
(72) Inventor: ESPY, James, W., Andover, MA 01810 (US); BLEIWEISS, Scott, J., Upton, MA 01568 (US); HAWKINS, Thomas, B., Boylston, MA 01505 (US); BROWN, Jeffrey, A., Brookfield, MA 01506 (US)
(74) Representative: Robson, Aidan John
(86) International application number: US9717432
(87) International publication number: WO98021660

(56) References cited:
- WO-A-95/13581
- US-A- 5 390 187
- US-A- 5 564 116
- SEAGATE TECHNOLOGY PAPER, 22 October 1994, SUTTON et al., "Fibre Channel: The Digital Highway Made Practical", pages 1-6.

## Description

### Technical Field

This invention relates to dynamically adding a disk array chassis to an already operating disk drive array, and communicating with the new disk array chassis over a communication path before the disk drives are interfaced on a high speed path with the disk drive controller.

### Background of the Invention

Subsystems comprising disk arrays, i.e., groups of small, independent disk drive modules used to store large quantities of data have been developed and found to possess many advantages over a single large disk drive. For example, the individual modules of a disk array typically take up very little space and typically use less power and cost less than a single large disk drive, yet, when grouped together in an array, provide the same data storage capacity as a single large disk drive. In addition, the small disks of an array retrieve data more quickly than does a single large disk drive because, with a small disk drive, there is less distance for the actuator to travel and less data per individual disk to search through. The greatest advantage to small disk drives, however, is the boost they give to I/O performance when configured as a disk array subsystem.

A disk array is typically housed in a chassis, which may be an enclosure, for holding a plurality of disk drives. When additional memory storage space is required, it is desirable to be able to add an additional disk array chassis to the existing system. It is further desirable that one be able to add the new disk array chassis to the existing system without needing to shut down the existing system. In other words, it is desirable to provide a dynamically upgradeable disk array system.

For a system including a disk controller communicating over a loop with a plurality of disks, it is undesirable to expand that bus by simply adding more disk drives. There may be a malfunction in any of the new disk drives. Further there may be a problem with the new connection to the existing loop. While the functional status of the new equipment can be tested by the disk controller after it is connected to the loop, if there is a malfunction, the entire loop (and disk drives) will be degraded and may be rendered inoperable or inaccessible. Therefore, it is desirable to be able to determine the integrity of the new disk drives and bus before permitting interface with the existing system.

### Summary of the Invention

In accordance with an embodiment of the present invention, as defined by the indepedent claims 1 and 9, a dynamically upgradeable disk array chassis includes a chassis that contains the disk drives. The disk drives and a disk controller are connected in a loop with a first serial bus for transmitting data from the controller and a second serial bus for passing data back to the controller. The disk drives are connected to one or the other of the serial busses. A shunt is connected to the first and second busses at the end opposite the controller and has a normal state in which the first bus is connected to the second bus thus completing the loop. The shunt may also assume a state in which each of the first and second serial busses are connected to separate outputs. The separate outputs are used to connect to a new disk array chassis with similar busses and shunting device. Each chassis has an environmental monitor that controls the state of its shunt. A separate serial communication bus connects to the monitor. When a new disk array chassis is connected to the existing chassis, the existing chassis's environmental monitor may communicate through its serial communication bus with the serial communication bus and environmental monitor on the new disk array chassis to determine whether conditions are suitable for extending the disk drive loop to include the disks on the new disk array chassis. If no faults are detected, the existing chassis's environmental monitor switches its shunt to connect the disk drive serial busses of the existing disk array chassis to those of the new disk array chassis. The new chassis's environmental monitor leaves its shunt in the normal state to connect the two disk drive busses and the disk drive loop is again complete.

In accordance with an embodiment of the invention, diplexing is used to provide the path for the serial communication bus to the environmental monitor, and the signals for the disk drive loop over the same wires of a single cable connecting the disk array chassis to one another. Preferably, low frequency signals are used for the communication with the environmental monitor and high frequency signals are used for disk drive loop communications including I/O operations. The low frequency signals may be similar to those of the RS-232 serial data protocol and the high frequency signals may adopt the Fibre Channel Arbitrated Loop signal protocol. The Fibre Channel 8B/10B signal encoding advantageously guarantees frequent transitions on the Fibre Channel signal so that the signal can always be distinguished from the low frequency signals. The Fibre Channel encoding keeps the frequency content of the Fibre Channel signal isolated to 100 MHZ and above by guaranteeing a transition at least every 5 bits.

A diplexer is connected to the environmental monitor serial communication bus and the separate disk drive serial bus outputs of the shunt for combining the high frequency data signals from the disk drive controller and the low frequency data signals from the environmental monitor serial communication bus which are to be sent out from the chassis. The diplexer also includes a configuration for separating the high frequency disk drive serial bus data signals from the low frequency environmental monitor SC8 data signals coming in from the new disk array chassis. By providing a single connector and diplexing and shunt control in the presently preferred embodiment for both the low and high frequency communication signals, the integrity of the new chassis may be determined over the low frequency environmental monitor communication path without electrically connecting the high frequency path and possibly disrupting operation on the existing disk array system. Only after the integrity of the connection and the operability of the new disk array enclosure is determined will the existing chassis shunt be switched into the state permitting connection or the high frequency data path with the disk drives of the new disk array chassis.

Referring now more particularly to the multiplexing of the two signals, it is noted that a common Fibre Channel (FC) data communications link may be used. In preferred embodiments of the invention, the first signal to be diplexed is a low frequency asynchronous or synchronous RS-232 type serial signal, and the second signal is the standard high frequency Fibre Channel signal. The terms "low frequency" and "high frequency" are used herein as relative to one another. As used herein, a low frequency signal is one that can be separated by filtering from the high frequency signal and vice versa. The low frequency signal, which in preferred embodiments is used to communicate between environmental monitor UARTS, is extremely slow in comparison to the Fibre Channel signal. This signal, preferably transmitted at 9600 baud, has a maximum fundamental frequency of 4.8 kHz, and a minimum frequency of DC. The square wave nature of this signal will normally have higher order harmonics which extend to very high frequencies. Consequently, in preferred embodiments of the invention, these harmonics may be limited by low pass filtering without affecting the information content of the signal, with the intended result of isolating the RS-232 type signal to a low frequency band from DC to about 100 kHz. The high frequency FC signal is limited to 100 MHZ. and beyond by the aforementioned 8B/10B encoding.

In an embodiment of the present invention, the high frequency Fibre Channel, and the low frequency RS-232 type signal, are frequency division multiplexed into a composite signal which is sent over a single cable. The cable will preferably be a twinax Fibre Channel arbitrated loop standard configuration having two conductor pairs (I pair for each direction) contained within a common shield. Isolation between the two conductor pairs is maintained by locating the two pairs orthogonally in the cable. Each pair will contain a FC signal in differential mode, and a RS-232 signal in common mode. In each conductor pair, one wire conducts a sum of the high frequency FC signal and the low frequency RS-232 type signal and the other wire conducts the difference resulting when the high frequency FC signal is subtracted from the low frequency RS-232 type signal.

### Brief Description of the Drawings

The invention may be more readily understood by reference to the following detailed description, taken with the accompanying drawings, in which:
FIG. 1 is a block diagram of a chain of dynamically upgradeable disk array chassis of the present invention.
FIG. 2 is a flow chart of an upgrading algorithm for use with the present invention.
FIG. 3 is a block diagram of a system of interconnected disk array chassis.
FIG. 4 is a block diagram of an environmental monitor for use in the disk array chassis of FIG. 1.
FIG. 5 is a graph showing the diplex filter frequency response.
FIG. 6 is a figure showing the composite Fibre Channel and RS-232 type signals.
FIG. 7 is a circuit diagram for the differential coupling circuit.
FIG. 8 is a circuit diagram showing the common mode coupling circuit.
FIG. 9 is a functional diagram showing an embodiment of the invention using twin-ax or twisted-pair cable and common mode coupling.
FIG. 10 shows an implementation of the FIG. 9 circuit diagram implemented using transformers.
FIG. 11 is a schematic circuit diagram of the low frequency signal input and output portions of a diplexer for use in the disk array chassis of FIG. 1.
FIG. 12 is a schematic circuit diagram of the high frequency signal input portion of a diplexer for use in the disk array chassis of FIG. 1.
FIG. 13 is a schematic circuit diagram of the high frequency signal output portion, a shunt and an expansion connector for use in the disk array chassis of FIG. 1.

### Detailed Description of the Preterred Embodiments

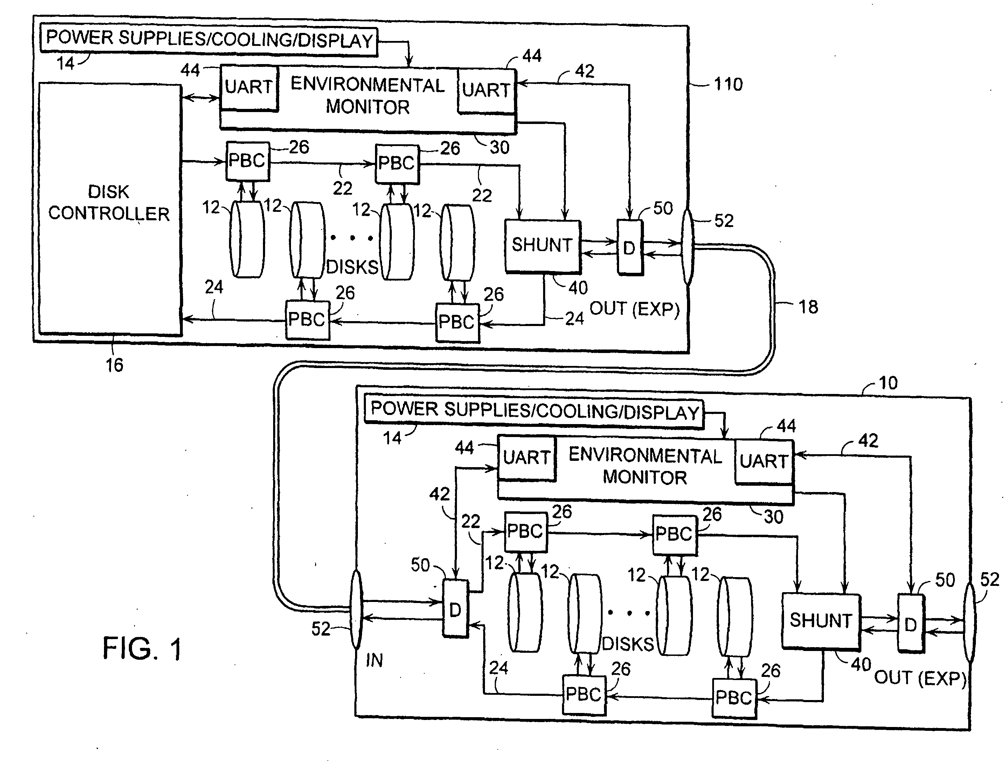

Referring now to the drawings, a disk array chassis 10 is shown in block diagram form in FIG. 1. The disk array chassis provides a series of openings into which disk drives 12 may be inserted. The chassis 10 of FIG. 1 is shown capable of housing a specified number of disk drives 12, for example ten. The mechanical chassis may be an open or closed housing or enclosure. Inside the chassis are conventional auxiliary equipment 14 including cooling fans, power supplies and a display card . The display card controls a display on the outside of the housing which may be used to exhibit certain status conditions. Status conditions are determined by the environmental monitor.

The disk drives are interconnected by a high speed serial data communication path. In accordance with the presently preferred embodiment, the communication path is a loop including a first serial bus 22 directing data in one direction and a second serial bus 24 directing data in a second opposite direction. The preferred data loop is a Fibre Channel arbitrated loop. A series of port bypass circuits 26 are inserted along the loop for making the connection with the disk drives 12. Each port bypass circuit 26 is controlled by an environmental monitor 30. The control line between the environmental monitor 30 and the port bypass circuit 26 exists, but is not shown in FIG. I. When the port bypass circuit is in its bypassed condition. its associated disk drive is shunted out of the loop. The environmental monitor 30 switches the port bypass circuit 26 into a non-bypassed condition so that signals on the serial bus are directed to and from the associated disk drive. In order to provide a high availability system, the disk array chassis of the presently preferred embodiment may include two high speed data communication loops and environmental monitors acting redundantly. Each loop is connected ultimately to a disk controller 16. The two disk control processors 16, one for each loop, further serve to provide high availability of the data storage system.

It is desirable that the disk array chassis permit dynamic upgrading. In that regard, a shunt 40 is provided along the Fibre Channel loop. In the presently preferred embodiment, the shunt 40 may be a port bypass circuit. The first serial bus 22 providing data in a first direction is connected to the shunt and the second serial bus 24 providing data in the opposite direction is also connected to the shunt. When the shunt is in its normally bypassed condition, the Fibre Channel loop ends at the shunt and data passes directly from the first serial bus 22 through the shunt to the second serial bus 24. When the shunt is switched into a non-bypassed state, the first bus 22 is allowed to pass to an expansion connection 52 and the second bus is connected to an incoming signal from the expansion connection. This extends the Fibre Channel loop into the next chassis.

The shunt is controlled by the environmental monitor 30. The environmental monitor 30 is provided with a serial communication path 42 that can lead to an adjacent disk array chassis. The environmental monitor is a supplier of status signals and other environmental information. The monitor may be any entity that sequences the status signals onto the serial communication path 42. The environmental monitors of the presently preferred embodiment are provided with two universal asynchronous receiver transmitters 44 (UART) for communicating with a chassis connected at either end of the chassis housing the monitor. While the communication path 42 may be provided for connection to an adjoining disk array chassis separate from the Fibre Channel loop, in accordance with the presently preferred embodiment of the invention, the communication path 42 is provided as a path for low frequency signals which are diplexed with the high frequency Fibre Channel signals for transmission over a single cable 18. Preferably a twinax cable 18 is used. This is a standard cable for Fibre Channel. The present invention advantageously adds a low frequency signal to the high frequency Fibre Channel signals normally carried by the cable. A twinax cable 18 includes four wire conductors, each divided into two pairs. Each pair transports signals in a single direction so one pair is used for the exiting signals and the other pair of wires in the twinax cable 18 is used for the returning signals.

A diplexer 50 is preferably connected to transmit and receive the low frequency signals from the environmental monitor 30 and also to transmit and receive high frequency signals from the shunt 40. The other end of the diplexer is connected to a cable connector 52. Regardless of the state of the shunt, communications between disk array chassis environmental monitors are possible over the single twinax cable 18. The disk array chassis includes a diplexer on both ends of the high frequency drive serial busses, except for the first chassis 110 that houses the disk controller 16 where only one diplexer is required. Communications can thus be maintained with the preceding and subsequent disk array chassis. The environmental monitor communicates with low frequency signals that can be separated from the high frequency Fibre Channel signals by filtering in the diplexer. The signals from the diplexed cables can be split with one copy of the signals being high pass filtered while the other copy of the signals is low pass filtered to extract each of the two separate signals. A preferred method of diplexing, however, will be described later herein.

A data storage system is configured by providing 1 or more disk control processors 16, each in communication with one of the Fibre Channel loops and in low frequency communication with the environmental monitors. Disk array chassis are connected to the processors in a continuous chain. The arrangement of the high frequency communication path with two serial busses through each disk array chassis providing communications in each direction permits a high frequency loop. The shunt in each disk array chassis is in the non-bypassed position except for the final active disk array chassis in the chain which remains in the normal bypass condition closing the loop. The disk control processors 16 may be provided in a first chassis 110 along with a disk array. This first chassis 110 in the chain only requires a single diplexer since there is no connection to a preceding chassis.

Dynamically upgrading a data storage system of the invention shall now be described. An existing chain of disk storage chassis is provided. The system may include a single chassis enclosing a disk array with the disk controller. Alternatively, the system may include additional disk array chassis connected in a chain to the controller chassis. The system is upgraded by connecting an additional disk array chassis to the last disk array chassis in the existing chain. A communication cable 18 is connected from the new disk array chassis to the expansion connector 52 on the chassis of the last disk array chassis in the existing chain. This last disk array chassis in the chain has a shunt 40 which is in the normally bypassed condition connecting its first serial bus 22 to the second serial bus 24 and completing the Fibre Channel loop. When the cable 18 is inserted into the connector, the shunt remains in the bypassed condition. The new disk array chassis is now in communication via the low frequency signals conducted over the low frequency serial communication path with the environmental monitor 30. After the connection has been made, the environmental monitor 30 in the existing system can communicate with the environmental monitor 30 in the new disk array chassis. If it is determined that the new disk array chassis is properly connected and operating properly, the shunt 40 is switched into the non-bypassed state extending the high frequency communications loop onto the new chassis.

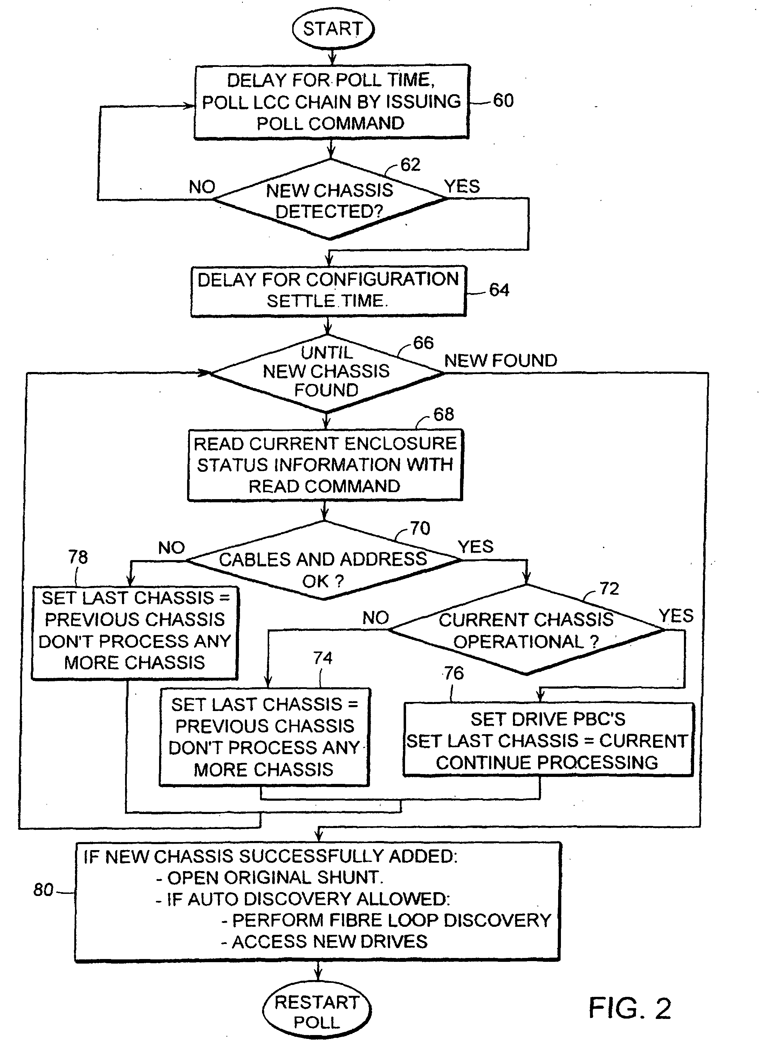

Referring now to FIG. 2, a flow chart of the communications conducted along the low frequency environmental monitor serial communication path, shall now be described. In accordance with the presently preferred embodiment, the commands supported by the serial protocol along the communication path include a poll, read and write command. These commands are issued by the disk controller 16. The poll command returns the address of each chassis and an indication if that enclosure has changed state since the last poll was issued. The address of a chassis is known to the environmental monitor 30. At present, it is preferred that the address be set by manual switches on the outside of the chassis. In this manner, a chassis can be given a distinct address different from each of the other chassis that have already been connected to the existing system. Preferably, the user will address the chassis in a numerical order such as 1, 2, 3, 4 .... A read command is directed to a specific chassis address and returns detailed environmental status about the chassis including its power, cooling and disk drive status. A write command is used by the disk controller to control the operation of the chassis. This command allows the disk controller to turn on or off any port bypass circuit and the shunt 40 of any chassis.

With the shunt of the penultimate chassis still in the bypass condition, the disk controller is able to monitor and control the newly added last chassis via the diplexed serial communication path 42 without disrupting the ongoing activity on the Fibre Channel loop. This allows the disk controller to verify the configuration and environmental status of the new chassis before enabling the new drives onto the Fibre Channel loop. As set forth in FIG. 2, the disk controller runs a periodic polling 60 of all the environmental monitors on the system over the low frequency serial communication path 42. The poll command goes out from the disk controller and is received by all of the environmental monitors that are connected to the low frequency serial communication path. Each environmental monitor 30 on the path returns its address and an indication of whether there has been any state change since the last poll. If a new chassis is detected 62 during this periodic polling process, a dynamic upgrading algorithm is initiated. A time delay 64 is imposed to allow for the configuration of the system to settle as the new chassis is powered up.

After completion of the time delay, the disk controller reads the status 68 from every environmental monitor 30 along the low frequency serial communication path 42. The read command produces from each environmental monitor information about the cabling and address of the chassis 70. This is used to verify that the cabling is properly configured. The address is checked to be sure it is within the range of legally assignable addresses. The read will also return information as to whether the current chassis is operational 72, i.e., powered and functioning properly. If a problem is found, with respect to any of the environmental monitors, the Fibre Channel loop will be terminated at the previous chassis 74, 78 so that only operational chassis are permitted on the Fibre Channel loop. If the chassis is properly connected and operational, processing continues 76 until the new chassis is found 66. If the new enclosure is properly connected and is operational, then it will be set as the last enclosure in the system 76. The shunt 40 of the previous chassis will be switched into a switched state 80 to permit Fibre Channel communications with the disks on the new chassis. The Fibre Channel loop may then he instructed to either automatically if it is so set or upon manual indication perform a discovery process to reinitialize the operation on the Fibre Channel loop to include the new disks. This discovery process on the Fibre Channel loop is disruptive to any Fibre Channel activity and may take several seconds to complete. Therefore, it is preferred that the system provide the system administrator with the option of automatically entering discovery or selecting a manual process that is initiated by a directive from the host system. The discovery process makes the disk drives known to the disk controller's Fibre Channel driver and allows the upper layer protocol drivers (SCSI) to communicate with the disks.

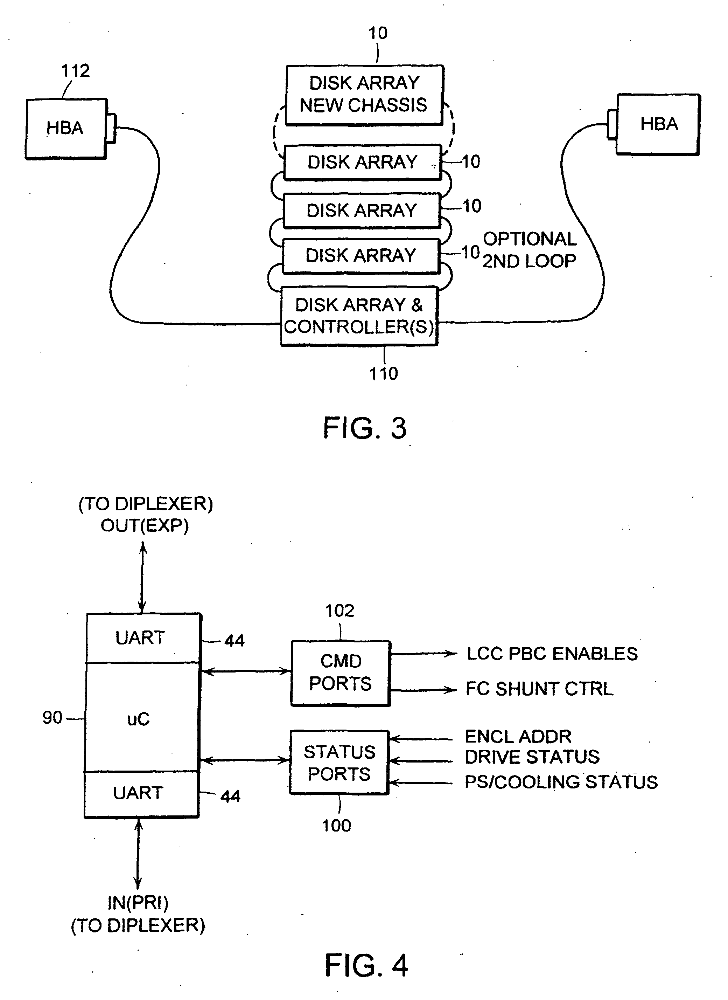

Advantageously, communications with the new disk array chassis along the high frequency Fibre Channel do not begin until the disk controller has had an opportunity to communicate with the new disk array chassis through the low frequency communication path. This process operates separately and independently through each of the two cables in a redundant system such as that shown in FIG. 3. Thus, a new disk array chassis in the redundant system embodiment is added by connecting two cables to the existing chain, one for each loop. The connection of each cable operates separately to enable communications over the respective Fibre Channel loop. FIG. 3 illustrates a chain of disk array chassis. At the bottom of the chain, the chassis 110 houses a pair of disk controllers as well as a disk array. Each disk controller is in connection with one of the Fibre Channel loops. The chassis with the disk controller is used for connection to one or more host bus adaptors 112. A host bus adaptor links a host computer with the memory storage-provided by the disk arrays. Each of the disk array chassis 10 in the chain is shown with one of two cables connecting each of its redundant loops to the adjoining disk array chassis.

A presently preferred environmental monitor 30 for use in the invention is shown in greater detail in the block diagram of FIG. 4. The monitor program is run on a microcomputer 90. The microcomputer is shown connected to the dual UART's 44. One UART is connected to the input end of the chassis, the other is connected to the expansion end. The UART receives and transmits signals on the low frequency serial communication path 42.

The environmental monitor 30 also includes a number of status ports 100 for monitoring various conditions within the enclosure. One of the status signals is the chassis address (End Addr). According to the present embodiment, the address of the chassis is manually set by switches on the outside of the chassis. Thus, a chassis can be manually set to have an address different from the already present disk array chassis in the existing chain of chassis. Other status signals include power system status, cooling status and drive status. The environmental monitor also includes port bypass circuit control latches 102. These control the port bypass circuits 26 for each of the disk drives that may be inserted into the disk array enclosure. Also one of the latches will control the shunt 40.

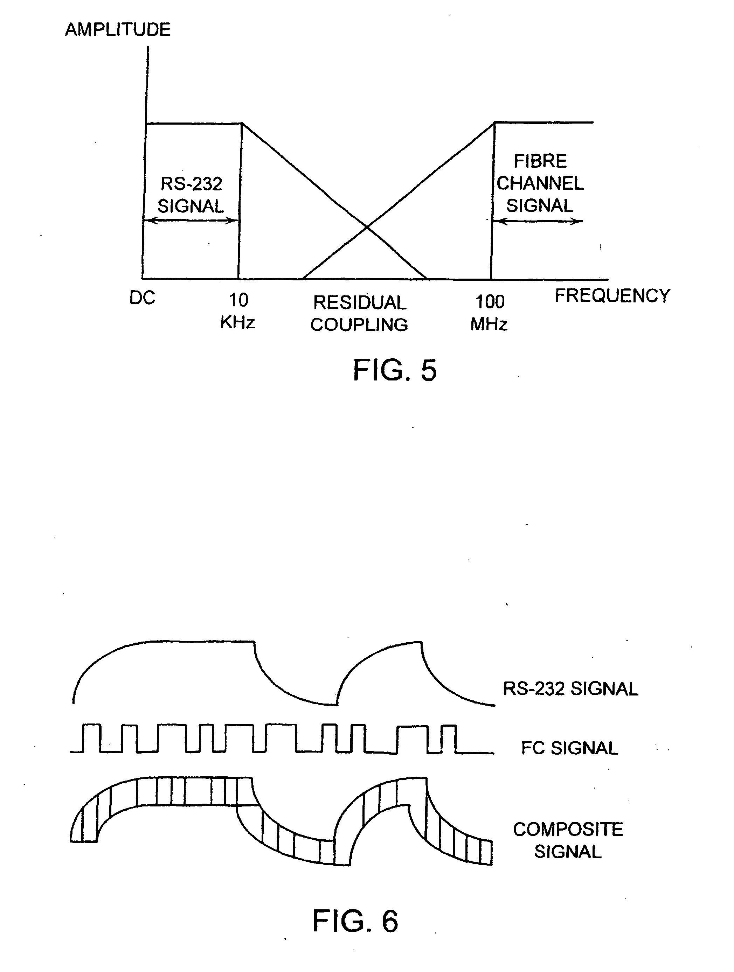

In preferred embodiments of the invention, low frequency signals and high frequency signals are frequency division multiplexed into a composite signal for transmission on cables between chassis. They may be simply combined and separated by a diplex filter at each end of the cable, hence use of the term "diplexing." FIG. 5 shows the diplex filter frequency response. FIG. 6 shows a RS-232 type signal, a FC signal, and the diplexed composite of the two. The diplex filter has three ports, the cable port, a low pass port and a high pass port. The filter is constructed by connecting the output of a high pass network and a low pass network together. The high pass network will preferably act as an open circuit at low frequency; the simplest form of this high pass network is a capacitor. The low pass network will preferably look like an open circuit to the high frequency Fibre Channel signal; the simplest form of the low pass network is an inductor or a resistor. The resistor may be used if the system can tolerate the DC resistance; alternatively, inductors may be used without loss of effectiveness, but they are not ideal devices since achieving broad bandwidth isolation with an inductor is more difficult than with resistors.

Diplexing may be used for communication between a variety of types of computer components. The connection between these components will preferably be with a pair of twinax cables carrying the two Fibre Channel loops. There is also an RS-232 type communications channel between environmental monitors. In embodiments of the invention, the use of twinax affords two options for coupling the RS-232 type low frequency signal onto the cables. In one embodiment of the invention, the signal may be applied as a differential signal on the twinax cable; in a preferred embodiment of the invention, the signal may be applied as a common mode signal to both sides of the twinax.

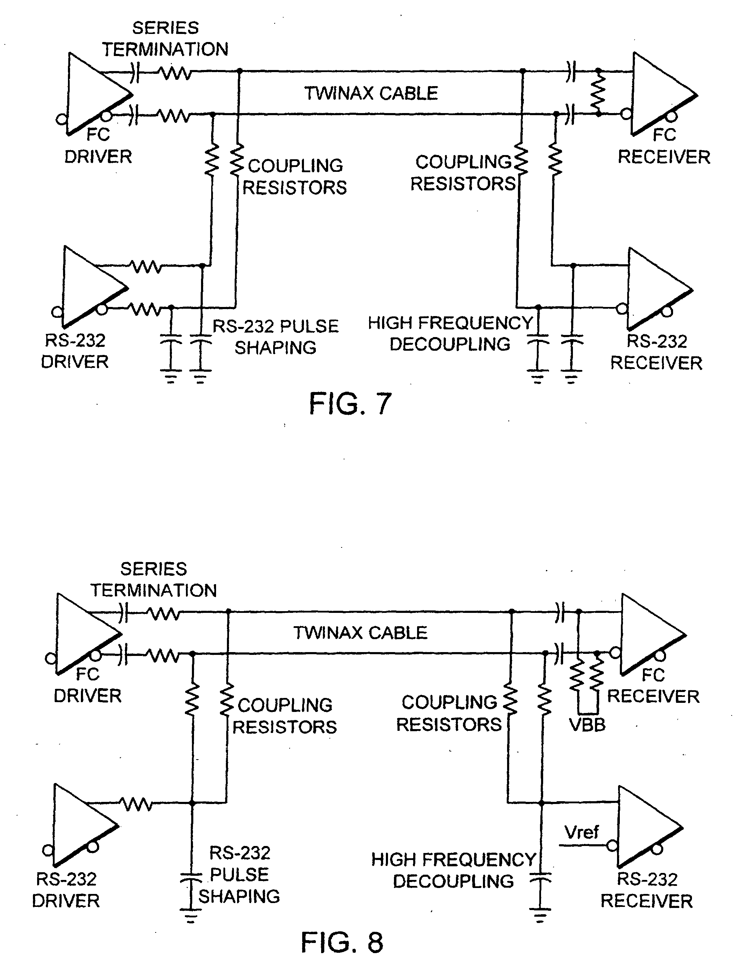

A circuit for the first method. differential coupling, is shown in FIG. 7. Coupling the RS-232 type low frequency signal differentially onto the twinax is one possible way to pass the signal from chassis to chassis. This is the same coupling method as that used for the Fibre Channel signals. This method has the highest level of noise immunity for the low frequency signals. Noise sources such as ground noise and low frequency magnetic fields can be easily rejected using this technique. On the down side, this coupling method will not work if equalized cable assemblies are used (that's not to say that equalization cannot be done). Another detractor is that any residual coupling of the RS-232 type low frequency signal into the FC signal will be a differential noise source and cause some amount of jitter.

Regarding ground noise, the chassis to chassis twinax-interconnects will preferably be in the range of 0 to 10 meters in length. These connections will be between chassis within a rack, or between racks in close proximity. There may be a ground voltage potential between two systems in different racks. This ground noise is superimposed on the cable as a common mode signal. The differential receiver will reject the common mode noise, and properly receive the differential signal.

Regarding magnetic susceptibility, in an embodiment of the invention, the twinax cable will preferably be shielded and, in the preferred embodiment of the invention, the shield is connected to chassis ground at both ends. Although this configuration is not the optimal configuration for magnetic shielding, this is required for good high frequency emissions performance. If the cable is brought into an AC magnetic field, a current will be induced to flow through the cable shield, around the ground loop. This current will couple a noise voltage into the internal signals through the mutual inductance between the shield and signal conductors. This noise voltage will be coupled in as a common mode noise source in this configuration, and be rejected by the receiver.

Regarding coupling noise, in an embodiment of the invention, the Fibre Channel signal is very low amplitude relative to the RS-232 type low frequency signal. With the use of a simple R/C pulse shaping filter, and simple capacitive/resistive diplex filter, there is some residual RS-232 signal coupled into the Fibre Channel receiver as shown in FIG. 5. This noise is minimized by making the slew rate of the RS-232 type low frequency signal as slow as possible for the required data rate. The residual noise coupled into the FC receiver is differential noise in this instance, and results in some additive jitter on the received FC signal. This noise is manageable for data rates of 9600 baud and below, while better lowpass filtering may be required for higher data rates.

Regarding external compatibility, in an embodiment of the invention, the rejection of the low frequency signal in the Fibre Channel receiver is accomplished by the AC coupling circuit at the receiver front end. This coupling circuit uses 1000 pF capacitor and 150 ohm termination resistance. If a cable carrying a diplexed signal is plugged into another vendor's equipment, the residual signal coupling, described further below, may be quite severe. The critical factor is the value of the coupling capacitance, as larger values increase the unwanted signal coupling. As there is no standard for this circuit, a preferred embodiment will allow for blocking the diplex signal when connecting to an external host device that cannot safely support the present invention. Preferably, a media converter will be designed to overcome such connection problems. Note, however, that this only applies to JBOD configurations ("just a bunch of disks," i.e. no controller for the disks within the JBOD unit) with DB-9 twinax cables.

Regarding equalizer compatibility, in an embodiment of the invention, the low frequency signal is coupled onto the twinax cable with lk ohm resistors instead of inductors. This places a high DC resistance in series with the RS-232 type low frequency driver. An equalizer, which would be used for a long twinax cable, will have a fairly low impedance between the differential signals. There will be a voltage divider effect between the equalizer impedance and the coupling resistors which will severely attenuate the low frequency signal. This will be a problem if an equalized cable assembly is used. A preferred solution to this issue is to use equalizers for the DB-9 twinax cable, and tapping off the low frequency signal before the equalizer. This would allow the DB-9 to DB-9 media converter to contain an equalizer if we want to support twinax links over 10 meters long. Preferred embodiments will not operate with twinax cables which have an equalizer in the cable connector housing.

Regarding crosstalk, in an embodiment of the invention, the invention will utilize twinax having four conductors contained within a common shield (hereinafter twinax4), wherein isolation between the two conductor pairs is maintained by locating the two pairs orthogonally in the cable. This insures symmetrical coupling from the + and - differential signals, and the net differential crosstalk between pairs is 0. One pair carries the outgoing signals and the other pin carries the returning signals. For differential coupling of the RS-232 type low frequency signal, there will not be any substantial crosstalk coupling from one pair to the other.

A circuit for the second method, common mode coupling, is shown in FIG. 8. Preferred embodiments of the invention utilize the fact that the Fibre Channel receiver has common mode rejection to reduce noise coupling from the low frequency signals. Consequently, since the two signaling approaches on the cable are orthogonal, allowing each receiver to reject the signal from the other. The high frequency signal will preferably be driven differentially on the twinax pair, and the low frequency signal will preferably be driven on both signal conductors with the cable shield serving as the signal return path. The advantages of this method are that it allows potentially higher signaling rates, is compatible with equalized cable assemblies, and is potentially more compatible with host interfaces. The noise rejection and crosstalk performance are worse however.

Regarding ground noise issues, in an embodiment of the invention, any ground potential difference between the transmitter and receiver ends of the cables will couple directly into the common mode low frequency signal as noise. While this is not a new problem for RS-232 type links, it is often overcome by running very large signal swings. A preferred embodiment of the invention would be to keep the swing at 5V peak to peak, or less, which may not be as immune to this noise as traditional links.

Regarding magnetic susceptibility, in an embodiment of the invention, by running the low frequency signal as a common mode signal, the twinax is being used essentially as a coaxial cable. This type of cable configuration allows the shield current induced by an AC magnetic field to impose a noise voltage onto the low frequency signal. This voltage will detract from the signal's noise margin.

Regarding coupling noise, in an embodiment of the invention, coupling of the RS-232 type low frequency signal into the Fibre Channel receiver is now less of a problem because the residual signal coupling is being applied as a common mode noise source. The receiver has very good rejection to low frequency common mode noise, so the noise does not create any jitter on the Fibre Channel signal. This allows the low frequency signal pulse filtering to be relaxed, and higher data rates can be accommodated.

The Fibre Channel receiver has a limited common mode rejection range, so the common mode signal must be attenuated before it reaches the receiver. This attenuation is achieved by a voltage divider effect between the Fibre Channel coupling capacitors, and the 150 ohm termination impedance. Preferred embodiments will have termination mode up of two 75 ohm resistors to VBB or some other DC source to provide a common mode termination.

Regarding external compatibility, in an embodiment of the invention, the 5 attenuation of the common mode low frequency signal in the Fibre Channel receiver is accomplished by the AC coupling circuit and termination at the receiver front end. The value of the coupling capacitor is less critical in this configuration, as any additional noise will be rejected. The critical factor for interoperability is that the termination be common mode. As there is no standard for this circuit, a preferred embodiment will allow for blocking the diplex signal when connecting to an external host device that cannot safely support the present invention. Preferably, a media converter will be designed to overcome such connection problems. Note, however, that this only applies to JBOD configurations with DB-9 twinax cables.

Regarding equalizer compatibility, in an embodiment of the invention, the common mode transmission of the low frequency signal is fully compatible with equalized cable assemblies. The equalizer will act as a low impedance in series with the signal path which will have a minimal effect.

Regarding crosstalk, the common mode low frequency signal does have a crosstalk issue on the twinax4. The cable has capacitive coupling between the two signal pairs which induces a noise voltage on the other low frequency signal in the cable. This coupling is dependent on risetime, and is sensitive to cable length. In preferred embodiments of the invention, overall the crosstalk will only be a few percent, and will not significantly degrade the noise margin of the signal.

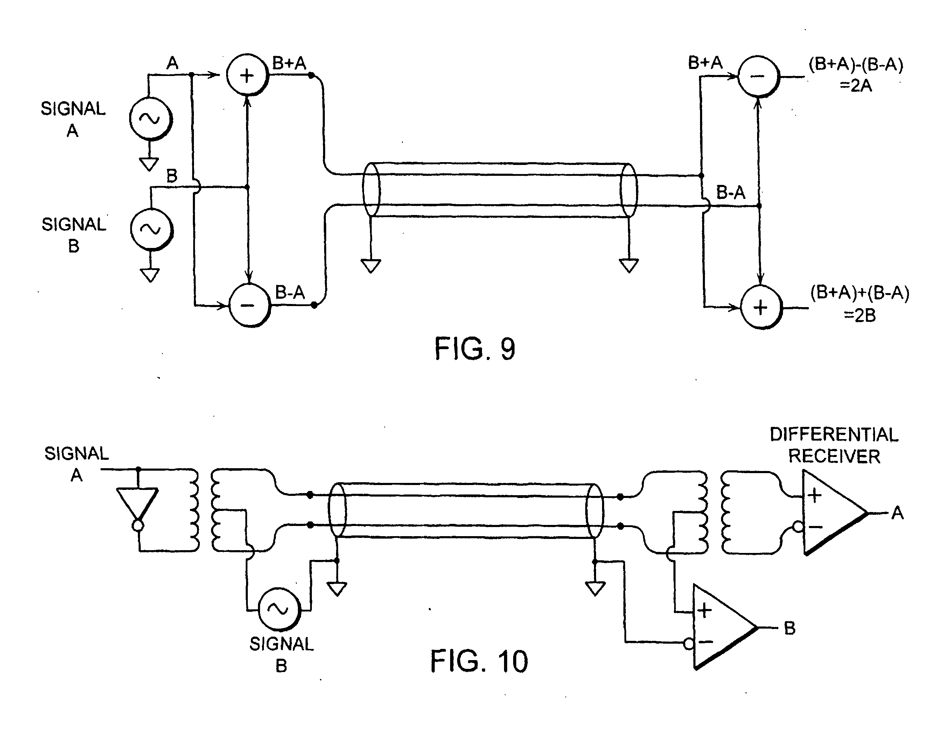

FIG. 9 is a simplified diagram of an embodiment of the diplexing of the invention, wherein first and second signals are transmitted on a communication link, and wherein the communication link is preferably twin-ax or twisted pair cable having a transmission-end and a receiving-end. The communication link has a pair of conductors including a first conductive path and a second conductive path. The first signal to be transmitted is designated as signal (A). and the second signal is designated as signal (B). Signal (A) is sent as a differential mode signal. Signal (B) is sent as a common mode signal. The first conductive path contains the addition of signals (A) + (B). The second conductive path contains the subtraction of (B) - (A). At the receiving-end, the first and second conductive paths are both sent separately to an adder and a subtractor. At the subtractor, the second conductive path's signal (B)-(A) is subtracted from the first conductive path's signal (B)+(A), resulting in the (A) signal. At the adder, the second conductive path's signal (B)-(A) is added to the first conductive path's signal (B)+(A), resulting in the (B) signal. A useful consequence of this embodiment of the invention is that in the subtractor, common mode line noise is efficiently eliminated, and in the adder, differential mode line noise is also eliminated.

FIG. 10 is a particular implementation of the FIG. 9 embodiment, using transformers.

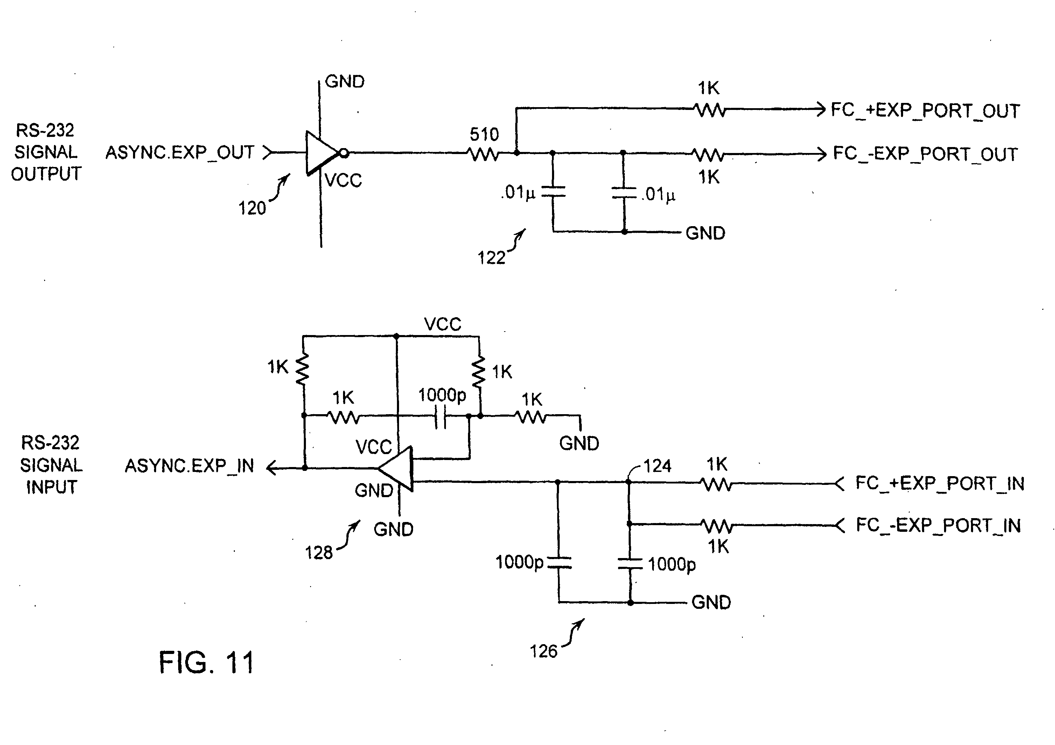

Referring now to FIGS. 11-13, the common mode coupling embodiment of a diplexer 50 is shown in greater detail. The RS-232 type low frequency signal output is provided to an inverter with hysteresis input 120. The signal is then passed through a low pass filter 122. The low pass filtered signal is then common mode coupled onto the twinax cable. The return signals are summed at a node 124 where both resuming signals are connected. The summed signal is low pass filtered by capacitors 126 connected to ground. The summed and filtered signal is provided to a receiver 128 which in the presently preferred embodiment is an LM 393 dual comparator.

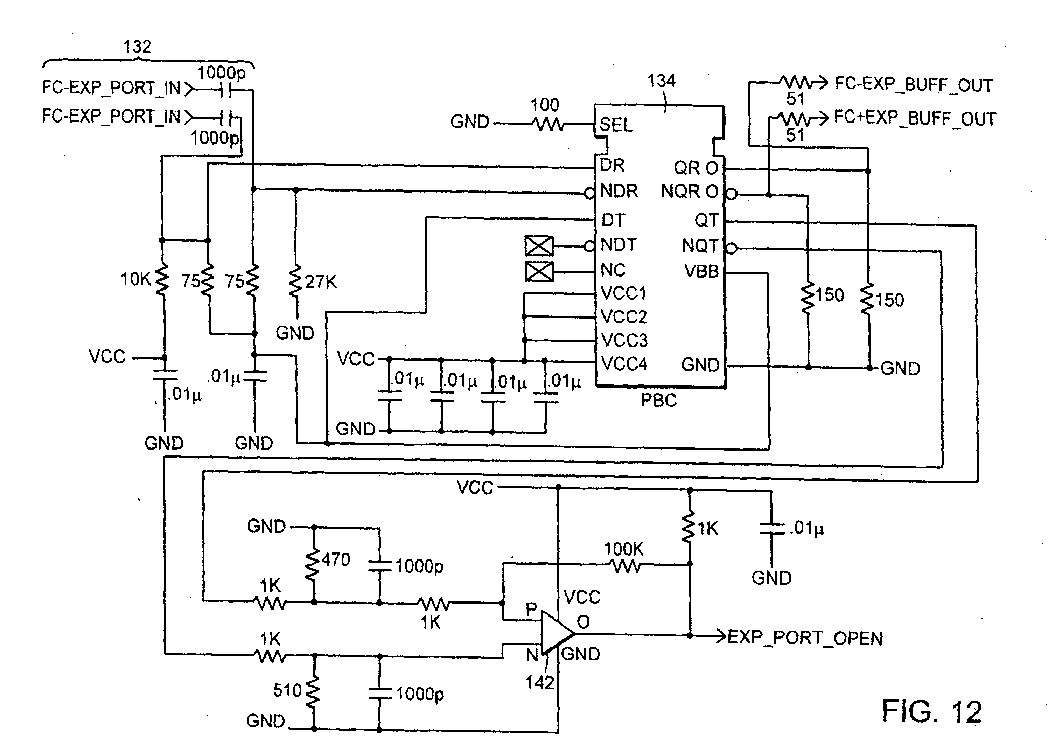

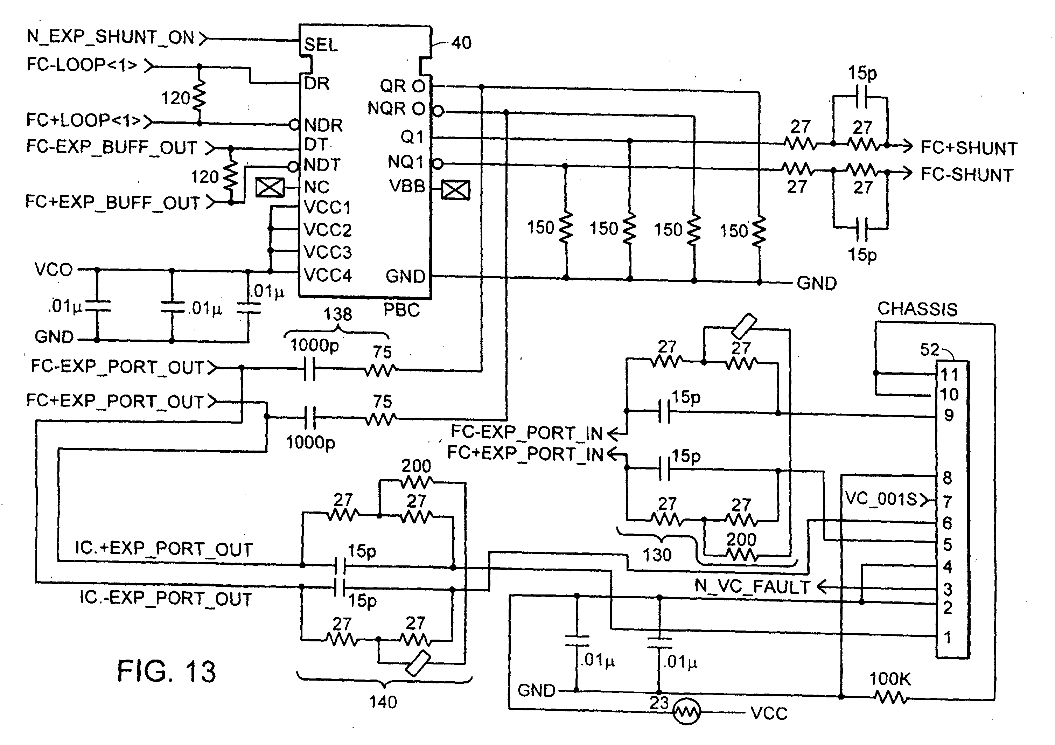

Referring to FIG. 13, the expansion connector 52 is shown. A DB9 connector is the presently preferred cable connector 52. Signals received on the connector are passed through an equalizer 130. The received signals are then passed to the low frequency input portion of FIG. 11 and the high frequency input portion of FIG. 12 which will now be described. The high frequency input portion passes the received signals through a high pass filter 132. A port bypass circuit 134 then acts as a differential receiver. The differential receiver acts as a subtractor looking at the difference between the received signals. The resulting high frequency signals are passed through the port bypass circuit 134 to the shunt 40 and to a signal detector 142. The output of the signal detector 142 may be used to allow the shunt 40 to remain in its normal state when no signals are detected. When a signal is detected the shunt 40 may assume its switched state if authorized by the environmental monitor.

The received signals that are passed through the shunt 40 continue onto the serial bus 24 represented by the FC-SHUNT signals. Outgoing high frequency fibre channel signals are provided by serial bus 22 represented by the FC-LOOP signals. The outgoing signals are driven through the shunt 40. Depending upon the state of the shunt 40, these signals will either loop back to the serial bus 24 on the FC-SHUNT lines or proceed towards the cable connector 52. The signals sent to the cable connector 52 are differentially driven by shunt 40. One signal is inverted and the other noninverted. The inverted and noninverted signals are passed through a high pass filter 138. Thereafter, the fibre channel signals are combined with the low frequency signals from the low frequency output portion of the diplexer to produce a sum of the high and low frequency signals and a difference between the low and high frequency signals. The sum and difference signals may then be passed through an equalizer 140 before they reach the cable connector 52.

## Claims

1. A dynamically upgradeable disk array chassis comprising:
a plurality of ports (26) for making connection with a plurality of data storage devices (12) housing within said disk array chassis;
first serial bus means (22, 24) for interconnecting said plurality of data storage devices, said first serial bus means including a first bus (22) for passing data in one direction and a second bus (24) for passing data in a second direction;
a shunt (40) connected to the first bus and the second bus and having a normal state in which the first bus is connected to the second bus across said shunt and a switched state in which each of the first bus and second bus is connected to a separate output of said shunt;
an environmental monitor (30) connected to said shunt to control the state of said shunt;
a first communication path (42) connected to said monitor;
connection means (52), coupled to said first communication path and to said outputs of said shunt, for making data communication connection with a second communication path and a second serial bus means from a further disk array chassis, wherein said environmental monitor communicates through said second communication path with the further disk array chassis before switching said shunt to the switched state to connect said first serial bus means with the second serial bus means on the further disk array chassis.

2. The disk array chassis of claim 1 further comprising
a further serial bus means, a further environmental monitor, a further shunt, a further communication path H and a further connection means so as to provide a redundant communication path with the plurality of storage devices.

3. The disk array chassis of claim 1 wherein said first serial bus means carries high frequency data signals and said first communication path carries low frequency data signals.

4. The disk array chassis of claim 3 further comprising a diplexer (50), connected between said connection means and both said shunt (40) and said first communication path, for adding the high frequency data signal to the low frequency data signal to produce a sum signal and for subtracting the high frequency data signal from the low frequency data signal to produce a difference signal.

5. The disk array chassis of claim 3 further comprising a diplexer (50) connected to said connection means for receiving a sum signal and a difference signal from the further disk array chassis and including an adder and a substractor for extracting a high frequency data signal and a low frequency data signal from the further disk array chassis.

6. The disk array chassis of claim 3 wherein said connection means comprises a twinax cable connector.

7. The disk array chassis of claim 6 further comprising a diplexer (50) connected to said shunt (40) and said first communication path to provide a combination of the high frequency data signals to said twinax cable connector.

8. The disk array chassis of claim 6 wherein the high frequency data signals and the low frequency data signals travel through said connector when said shunt is in the switched state.

9. A method for dynamically upgrading a data storage system said data storage system having a plurality of data storage devices connected to a first data bus means and a first environmental monitor connected to a first communication path, said first data bus means being connected to a switch, the method comprising the steps of:
providing a disk array chassis having a plurality of data storage devices connected to a second data bus means and an environmental monitor connected to a second communication path;
connecting said disk array chassis to said data storage system by connecting the first communication pain to the second communication pain;
communicating between said data storage system and said disk array chassis through the first and second communication paths; and
activating a switch in said data storage system, in response to said step of communicating, to permit signals to be passed between said first data bus means on said data storage system and said second data bus means on said disk array chassis.

10. The method of claim 9 wherein the first and second data bus means comprise a first bus for passing data in one direction and a second bus for passing data in a second direction and said step of activating extends a communication loop through said data storage system and onto the first bus and the second bus of said disk array chassis.

11. The method of claim 9 further comprising combining high frequency signals on the first data bus means with low frequency signals on the communication path in a diplexer and wherein said step of connecting comprises connecting a cable between the diplexer of said new disk array chassis and a connector on said storage system.

## Patentansprüche

1. Dynamisch ausbaufähiges Plattenarray-Gehäuse, das Folgendes umfasst:
eine Mehrzahl von Ports (26) zur Herstellung einer Verbindung mit einer Mehrzahl von Datenspeichergeräten (12), die in dem genannten Plattenarray-Gehäuse untergebracht sind;
einen ersten seriellen Bus (2, 24) zum Verknüpfen der genannten Mehrzahl von Datenspeichergeräten miteinander, wobei der genannte erste serielle Bus einen ersten Bus (22) zum Leiten von Daten in einer Richtung und einen zweiten Bus (24) zum Leiten von Daten in einer zweiten Richtung aufweist;
einen mit dem ersten Bus und dem zweiten Bus verbundenen Nebenschluss (40), der einen normalen Zustand, in dem der erste Bus mit dem zweiten Bus über den genannten Nebenschluss verbunden ist, und einen geschalteten Zustand hat, in dem der erste Bus und der zweite Bus mit einem separaten Ausgang des genannten Nebenschlusses verbunden sind;
einen Umgebungsmonitor (30), der mit dem genannten Nebenschluss verbunden ist, um den Zustand des genannten Nebenschlusses zu steuern;
einen ersten Kommunikationspfad (42), der mit dem genannten Monitor verbunden ist;
ein Anschlussmittel (52), das mit dem genannten ersten Kommunikationspfad und den genannten Ausgängen des genannten Nebenschlusses zur Herstellung einer Datenkommunikationsverbindung mit einem Kommunikationspfad sowie mit einem zweiten seriellen Bus von einem weiteren Plattenarray-Gehäuse gekoppelt ist, wobei der genannte Umgebungsmonitor durch den genannten zweiten Kommunikationspfad mit dem genannten weiteren Plattenarray-Gehäuse kommuniziert, bevor er den genannten Nebenschluss in den geschalteten Zustand schaltet, um den genannten ersten seriellen Bus mit dem zweiten seriellen Bus auf dem weiteren Plattenarray-Gehäuse zu verbinden.

2. Plattenarray-Gehäuse nach Anspruch 1, ferner umfassend einen weiteren seriellen Bus, einen weiteren Umgebungsmonitor, einen weiteren Nebenschluss, einen weiteren Kommunikationspfad und ein weiteres Verbindungsmittel, um einen redundanten Kommunikationspfad mit der Mehrzahl von Speichergeräten herzustellen.

3. Plattenarray-Gehäuse nach Anspruch 1, bei dem der genannte erste serielle Bus hochfrequente Datensignale und der genannte erste Kommunikationspfad niederfrequente Datensignale führt.

4. Plattenarray-Gehäuse nach Anspruch 3, ferner umfassend einen Diplexer (50), der zwischen dem genannten Verbindungsmittel und sowohl dem genannten Nebenschluss (40) als auch dem genannten ersten Kommunikationspfad geschaltet ist, um das hochfrequente Datensignal zum niederfrequenten Datensignal zu addieren, um ein Summensignal zu erzeugen und um das hochfrequente Datensignal von dem niederfrequenten Datensignal zur Erzeugung eines Differenzsignals zu subtrahieren.

5. Plattenarray-Gehäuse nach Anspruch 3, ferner umfassend einen Diplexer (50), der mit dem genannten Verbindungsmittel verbunden ist, um ein Summensignal und ein Differenzsignal von dem weiteren Plattenarray-Gehäuse zu empfangen, und mit einem Addierer und einem Subtrahierer zum Extrahieren eines hochfrequenten Datensignals und eines niederfrequenten Datensignals von dem weiteren Plattenarray-Gehäuse.

6. Plattenarray-Gehäuse nach Anspruch 3, bei dem das genannte Verbindungsmittel einen Twinaxialkabelverbinder umfasst.

7. Plattenarray-Gehäuse nach Anspruch 6, ferner umfassend einen Diplexer (50), der mit dem genannten Nebenschluss (40) und dem genannten ersten Kommunikationspfad verbunden ist, um eine Kombination der hochfrequenten Datensignale mit dem genannten Twinaxialkabelverbinder zu erzeugen.

8. Plattenarray-Gehäuse nach Anspruch 6, bei dem die hochfrequenten Datensignale und die niederfrequenten Datensignale durch den genannten Verbinder fließen, wenn sich der genannte Nebenschluss im geschalteten Zustand befindet.

9. Verfahren zum dynamischen Ausbauen eines Datenspeichersystems, wobei das genannte Datenspeichersystem eine Mehrzahl von Datenspeichergeräten, die mit einem ersten Datenbus verbunden sind, und einen ersten Umgebungsmonitor hat, der mit einem ersten Kommunikationspfad verbunden ist, wobei der genannte ersten Datenbus mit einem Schalter verbunden ist, wobei das Verfahren die folgenden Schritte umfasst:
Bereitstellen eines Plattenarray-Gehäuses mit einer Mehrzahl von Datenspeichergeräten, die mit einem zweiten Datenbus verbunden sind, und einem Umgebungsmonitor, der mit einem zweiten Kommunikationspfad verbunden ist;
Verbinden des genannten Plattenarray-Gehäuses mit dem genannten Datenspeichersystem durch Verbinden des ersten Kommunikationspfades mit dem zweiten Kommunikationspfad;
Kommunizieren zwischen dem genannten Datenspeichersystem und dem genannten Plattenarray-Gehäuse durch den ersten und den zweiten Kommunikationspfad; und
Aktivieren eines Schalters in dem genannten Datenspeichersystem als Reaktion auf den genannten Schritt des Kommunizierens, um es zuzulassen, dass Signale zwischen dem genannten ersten Datenbus in dem genannten Datenspeichersystem und dem genannten zweiten Datenbus auf dem genannten Plattenarray-Gehäuse geleitet werden.

10. Verfahren nach Anspruch 9, bei dem der erste und der zweite Datenbus einen ersten Bus zum Leiten von Daten in einer Richtung und einen zweiten Bus zum Leiten von Daten in einer zweiten Richtung umfassen, und wobei der genannte Schritt des Aktivierens eine Kommunikationsschleife durch das genannte Datenspeichersystem und auf den ersten Bus und den zweiten Bus des genannten Plattenarray-Gehäuses erweitert.

11. Verfahren nach Anspruch 9, ferner umfassend das Kombinieren von hochfrequenten Signalen auf dem ersten Datenbus mit niederfrequenten Signalen auf dem Kommunikationspfad in einem Diplexer, und wobei der genannte Schritt des Verbindens das Anschließen eines Kabels zwischen dem Diplexer des genannten neuen Plattenarray-Gehäuses und einem Verbinder an dem genannten Speichersystem umfasst.

## Revendications

1. Châssis de pile de disques pouvant être mis à niveau dynamiquement comprenant :
une pluralité de ports (26) pour réaliser une connexion avec une pluralité de dispositifs de mémorisation de données (12) abrités dans ledit châssis de pile de disques ;
un premier moyen de bus série (22, 24) pour interconnecter ladite pluralité de dispositifs de mémorisation de données, ledit premier moyen de bus série comportant un premier bus (22) pour passer des données dans un sens et un deuxième bus (24) pour passer des données dans un deuxième sens ;
une dérivation (40) connectée au premier bus et au deuxième bus et ayant un état normal dans lequel le premier bus est connecté au deuxième bus en travers de ladite dérivation et un état commuté dans lequel chacun des premier bus et deuxième bus est connecté à une sortie séparée de ladite dérivation ;
un dispositif de contrôle environnemental (30) connecté à ladite dérivation afin de commander l'état de ladite dérivation ;
un premier trajet de communication (42) connecté audit dispositif de contrôle ;
un moyen de connexion (52), couplé audit premier trajet de communication et auxdites sorties de ladite dérivation, pour établir une connexion de communication de données avec un deuxième trajet de communication et un deuxième moyen de bus série à partir d'un autre châssis de pile de disques, dans lequel ledit dispositif de contrôle environnemental communique par le biais dudit deuxième trajet de communication avec l'autre châssis de pile de disques avant de commuter ladite dérivation sur l'état commuté afin de connecter ledit premier moyen de bus série au deuxième moyen de bus série sur l'autre châssis de pile de disques.

2. Châssis de pile de disques selon la revendication 1, comprenant en outre un autre moyen de bus série, un autre dispositif de contrôle environnemental, une autre dérivation, un autre trajet de communication et un autre moyen de connexion de manière à fournir un trajet de communication redondant avec la pluralité de dispositifs de mémorisation.

3. Châssis de pile de disques selon la revendication 1,
dans lequel ledit premier moyen de bus série achemine des signaux de données haute fréquence et ledit premier trajet de communication achemine des signaux de données basse fréquence.

4. Châssis de pile de disques selon la revendication 3, comprenant en outre un diplexeur (50), connecté entre ledit premier moyen de connexion et à la fois ladite dérivation (40) et ledit premier trajet de communication, pour ajouter le signal de données haute fréquence au signal de données basse fréquence afin de produire un signal de somme et pour soustraire le signal de données haute fréquence du signal de données basse fréquence. afin de produire un signal de différence.

5. Châssis de pile de disques selon la revendication 3, comprenant en outre un diplexeur (50) connecté audit moyen de connexion pour recevoir un signal de somme et un signal de différence à partir de l'autre châssis de pile de disques et comportant un additionneur et un soustracteur pour extraire un signal de données haute fréquence et un signal de données basse fréquence à partir de l'autre châssis de pile de disques.

6. Châssis de pile de disques selon la revendication 3, dans lequel ledit moyen de connexion comprend un connecteur de câble twinax.

7. Châssis de pile de disques selon la revendication 6, comprenant en outre un diplexeur (50) connecté à ladite dérivation (40) et audit premier trajet de communication afin de fournir une combinaison des signaux de données haute fréquence audit connecteur de câble twinax.

8. Châssis de pile de disques selon la revendication 6, dans lequel les signaux de données haute fréquence et les signaux de données basse fréquence se propageant à travers ledit connecteur quand ladite dérivation se trouve dans l'état commuté.

9. Procédé pour mettre à niveau dynamiquement un système de mémorisation de données, ledit système de mémorisation de données ayant une pluralité de dispositifs de mémorisation de données connectés à un premier moyen de bus de données et un premier dispositif de contrôle environnemental connecté à un premier trajet de communication, ledit premier moyen de bus de données étant connecté à un commutateur, le procédé comprenant les étapes de :
fourniture d'un châssis de pile de disques ayant une pluralité de dispositifs de mémorisation de données connectés à un deuxième moyen de bus de données et à un dispositif de contrôle environnemental connecté à un deuxième trajet de communication ;
connexion dudit châssis de pile de disques audit système de mémorisation de données en connectant le premier trajet de communication au deuxième trajet de communication ;
communication entre ledit système de mémorisation de données et ledit châssis de pile de disques par le biais des premier et deuxième trajets de communication ; et
activation d'un commutateur dans ledit système de mémorisation de données, en réponse à ladite étape de communication, afin de permettre aux signaux de passer entre ledit premier moyen de bus de données sur ledit système de mémorisation de données et ledit deuxième moyen de bus de données sur ledit châssis de pile de disques.

10. Procédé selon la revendication 9, dans lequel les premier et deuxième moyens de bus de données comprennent un premier bus pour passer des données dans un sens et un deuxième bus pour passer des données dans un deuxième sens et ladite étape d'activation étend une boucle de communication à travers ledit système de mémorisation de données et sur le premier bus et le deuxième bus dudit châssis de pile de disques.

11. Procédé selon la revendication 9, comprenant en outre la combinaison de signaux haute fréquence sur le premier moyen de bus de données avec des signaux basse fréquence sur le trajet de communication dans un diplexeur et dans lequel ladite étape de connexion comprend la connexion d'un câble entre le diplexeur dudit nouveau châssis de pile de disques et un connecteur sur ledit système de mémorisation.
